(19) **Europäisches Patentamt European Patent Office Office européen des brevets**

(11) **EP 1 787 704 A2**

(12) **EUROPEAN PATENT APPLICATION**

(43) Date of publication:
23.05.2007 Bulletin 2007/21

(51) Int Cl.:
*B01D 46/24* (2006.01) *F01N 3/021* (2006.01)
*F01N 3/031* (2006.01)

(21) Application number: 06023725.2

(22) Date of filing: 15.11.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: 17.11.2005 EP 05110904

(71) Applicant: **Diaz Perez, Jaime Octavio Amapolas 3763 casa A Providencia Santiago de Chile (CL)**

(72) Inventor: **Diaz Perez, Jaime Octavio Amapolas 3763 casa A Providencia Santiago de Chile (CL)**

(74) Representative: **Wolff, Felix et al Kutzenberger & Wolff Theodor-Heuss-Ring 23 50668 Köln (DE)**

(54) **Apparatus for filtering micro particles**

(57) Apparatus for filtering micro particles, comprising tubular cells, wherein a first end of each cell is open to let a fluid enter from a distribution area into the cell and a second end of each cell is closed, the fluid being forced to change direction of flow from axial to radial for vacating the cell through a cell mantle into an escape area, and wherein the tubular cells form a package supported by a flange, the flange enveloping the package and separating the distribution area from the escape area.

GAS ENTRY

GAS EXIT

EXIT GASES' FLOW CHANNEL *Fig. 1e*

EP 1 787 704 A2

**Description**

The invention refers to an apparatus for filtering micro particles, comprising tubular cells, wherein a first end of each cell is open to let a fluid enter from a distribution area into the cell and a second end of each cell is closed, the fluid being forced to change direction of flow from axial to radial for vacating the cell through a cell mantle into an escape area, and wherein the tubular cells form a package supported by a flange, the flange enveloping the package and separating the distribution area from the escape area.

Due to the high level of environmental pollution, an effective system to retain the wastes, coming from combustion sources is needed. This invention refers to a filter for trapping solid particles contained in high pressure and temperature gases. Microparticles are emitted by sources, such as grinding processes, sublimation from smelting process, emissions from inner combustion engines, high pressure and temperature reactors, boilers, chimneys, etc. It also becomes more and more necessary to trap effectively the residues emitted by combustion vehicles.

The retention of particulate material at vehicle exhausts involves the problems, that particles are of microscopic sizes of about 160 Å to 900 Å ($160 \times 10^{-10}$ m to $900 \times 10^{-10}$ m), and the fact that engine residue is ejected at high temperatures of about 300 °C to 400 °C and high pressures (306.122 kilopond/m$^2$).

The state of the art technology for particulate material retention has made known for example natural fibre, such as paper or artificial fibre, such as several types of polymers as filter materials of reasonable costs. However, those are not the proper materials to use with high temperature and high pressure engine exhaust gas, e.g. from diesel engines. Materials that meet the requirements are for example ultra fine types of mesh made of special steels, tungsten or other such metal, which is expensive. Furthermore, the fabrication costs rise with the fineness of the mesh.

Furthermore the devices known are often somehow bulky and need an amount of space, which is not available in common vehicles as cars, trucks, buses, etc. Engines should further not be subjected to a counter pressure in the exhaust pipe that alters engine normal running cycle, risking a decrease of efficiency, damage to gaskets, engine stopping or, eventually, destruction. Therefor, application of certain methods traditionally used for retention/filtration is limited, as those are based on high pressures to force fluid through a retaining layer that traps the filtrate.

The objective of the present invention is to provide an apparatus for filtering micro particles contained in high pressure, high temperature gases, in which the deficiencies mentioned above are reduced or eliminated, and which is produced at reasonable costs, thus solving for example the technical problems of high speed escape or the inconvenience of introduction of an excessive counter pressure to the escape fluids or the extremely small size of the solid particles of the fluid or the high fluid temperature and pressure.

The objective is achieved with an apparatus for filtering micro particles according to claim 1. Preferred embodiments are described in the subordinate claims.

An apparatus for filtering micro particles emitted by any micro-particle-emitting source such as grinding mills, smelting process sublimation, internal combustion engines, high pressure / temperature reactors, boilers, stacks, etc comprises the following components: an assembly of tubular cells which could for example be cylindrical, square, rectangular or polygonal. The cell arrangement designed to force a fluid inside the cell through the a first end of the cell and to exit through a cell mantle because the other, second end of the cell is closed.

One or more tubular cells preferably comprise a relief valve installed at the second end. The relief valve is designed to operate at a certain exhaust back pressure that, for example, can damage the system that generates the exhaust gas or fluid, or the filter itself.

The tubular cells are distributed to form a package or group supported by a flange, enveloping the package, preferably inside of a casing that contains and protects the bundle or package of tubes. Preferably the support flange and the casing together form a tight chamber which forces the fluid, for example exhaust gas to enter the tubular cells following an axial direction, and allows the fluid to vacate from the cells towards an escape area following a radial direction. The escape area or chamber is for example a section of the casing, which is separated from a distribution area by the cell support flange, which supports the package of cells, preferably in parallel. The change of direction of flow of the fluid from axial to radial reduces the speed of the fluid down to such a level that micro particles can settle over a retaining cloth and gradually fill up interstices in the retaining cloth and spaces between the retaining cloths.

As the saturation process of the retaining cloth progresses, the capacity of the system to trap particles increases. Especially the capacity of the retaining cloth to trap particles ever smaller is increased. The number of cells and the individual cell mantle area, which depends upon the number of layers of retaining cloth wrapped around the cell mantle, are the factors governing the speed of saturation. These two factors are defined when calculating the requirements of each particular case in order to allow the particle flow to pass through the retention cloth layers and to change the direction of the flow from longitudinal to radial.

The person skilled in the art understands that the design of the cells takes the velocity of the fluid to a limit very close to zero, which as a physical consequence, reduces the kinetic energy of the particles to a level closer to zero. One important aspect of the invention is to provide a low differential pressure or pressure loss between the inside and the outside of the cell. Once the fluid has vacated the cell, it recovers velocity. The differential pressure of the cell can become seriously affected, if the fluid flow is interfered by obstacles in its way outside the cell. The inventive cell design allows a high filtration surface, without the proximity of the cells causing the retaining cloths to approach each other too close. The distance should for example not be of less than about 3 mm. A blockade of the intercellular flow and a subsequent increase of the loss of pressure of the system is thereby prevented.

The inventive apparatus provides an efficient trapping of micro particles issued for example from any ontogenic or geogenic source. The remarkable effect of speed reduction, that the cells produce, allows for example that the retention cloth traps the micro particles easily. The micro particles reach a speed near zero in the axial direction, approximately at the moment when they change direction of flow to the perpendicular, i.e. radial direction of flow towards the cell mantle, which produces a non negligible retaining effect.

The effect of this geometric disposition of the cells is used in that the solid particles are softly placed on the retaining cloth, structuring a microscopic reticulate that, afterwards, once the filter saturates, allows subsidiarily to retain gases through the adsorption phenomenon, due to the high superficial tension of the interstitial surfaces.

The cells preferably comprise a supporting structure, which consist in a perforated metal tube, spread metal or a structurally self-supporting metal mesh, and the supporting structure is wrapped around with layers of the retaining cloth, which is resistant to exhaust gas/fluid temperature and pressure.

In a preferred embodiment a part of the first end of each cell projects through an opening in the supporting flange, the part of the first end preferably being bent in angle of about 90° outwardly from the cell axis, the bent parts preferably being welded to the supporting flange and/or a neighbouring bent part of a first end. Further it is preferred, that the first ends of the cells form a rectangular and a metal tape, that surrounds the rectangular, is welded to the outwardly facing walls of the cells.

The apparatus needs to be well structured, to be able for example to resist the extreme vibrations when it is applied for example in mobile sources as trucks, buses, or ships, or, when being static, the fluid or exhaust issuing sources originate high degrees of vibration, for example in Diesel generators of high power, ovens or large kilns. The required resistance is improved by the reinforcement of each cell, by bending in about two millimeters of the metal which enforces the structure of the cell in both extremes all around the upper edge of the first end. Welding the metal of the cell to the metal of the flange, and welding all the cells of the package in the central point of every set of four cells further improves stability. An external rectangular or square ring, which surrounds the matrix conformed by the package of cells, is also welded to the side walls of the cells. In this way, a virtual column is conformed, giving a high vibration resistance to the package of cells.

It is also preferred that a thermal fabric layer made of mineral wool covers the inside of the second end of the cells in such a way that the thermal fabric layer penetrates the inside space of the cells in a distance of about 0.01 m or more, the thermal fabric layer preferably covering the second ends of a multitude of cells, the second ends being closed by a steel plate, which is pressed against the thermal fabric layer and in that position is welded to the second ends of the cells. This provides that there will be less leakage of gases through the second ends of the cells, which is an important aspect of the invention. The enclosure of the fluids in each cell inside the casing depends upon a tight sealing of the blind extreme of the cells. If fluid could escape avoiding the retaining cloth, it would transport the accumulated powdered material stocked inside the cell to the outer atmosphere. This is widely prevented by the thermal fabric layer.

Preferably each cell supporting structure is made of spread metal or fine metal mesh in such a way that it allows particulate material to settle over, and accumulate in, mesh spaces, establishing a limit between the already settled material that is permanently accumulated on and between cloth layers on the one hand, and the particulate material that builds up from the metal mesh towards the cylindrical cell centerline or axis on the other hand. The cells have to be cleaned periodically, to remove at least the latter particulate material.

In a further preferred embodiment the retaining cloth is arranged as to form a stereo mesh, the retaining cloth comprising visible spaces and being wrapped around itself, thereby forming a labyrinth in the radial flow direction of the fluid. The arrangement of the retaining cloth to form a stereo mesh, i.e. instead of manufacturing an ultra fine metal mesh using traditional systems is less expansive. A retaining cloth with visible spaces is wrapped around itself forming a labyrinth that follows the radial flow direction and is for example more efficient than that obtained with a flat mesh. This labyrinth has a low load loss coefficient or, using filtering terminology, a high gas permeability.

It is preferred that the cells gradually produce an interlayer filling formed by the particulate material, being able to trap particles sized 500 Å and smaller, preferably smaller than the particles that form the reticule. Further it is preferred that the speed of the fluid is reduced down to such a level that the low kinetic energy of the retained particles prevents them from getting packed and/or forming hardened layers. The number of layers of retention cloth wrapped around the supporting structure is preferably varied from one layer up to the number of layers producing an exhaust gas back pressure allowed by the system that generates the exhaust gas or fluid.

The stereo mesh has the beneficial ability to trap micro particles which cannot escape due to their low kinetic energy resulting from the multiplicity of cells. Additionally, the cells produce gradually an interlayer filling formed by the particulate material, which is able to trap particles sized 500 Å and smaller, especially smaller than the particles that form the reticule. The number of wraps of retention cloth around the cell mantle is varied from one wrap up to the number of wraps allowed by the loss of load available in the system, i.e. the system constructs by itself a highly permeable micro porous medium. The low kinetic energy of the retained particles preferably prevents them from getting packed or forming hardened layers as it may happen in systems that provide the micro porous mediums synthetically.

In a preferred embodiment, the flange supporting the cells acts as a base and a diverter inside the casing, the casing together with the flange allowing the fluid to follow only one way, with no possible alternative, towards the interior of the cells, and further out of the casing after the fluid having deposited its particulate material inside the cells; wherein the cells are preferably removable from the casing, in order to be cleaned and reinstalled later into the casing.

In a further embodiment of the invention a primary set of cells is serially arranged with a secondary set of cells, the secondary set of cells containing the same or different number of cells than the primary set, and that preferably the primary and secondary sets of cells are serially arranged with further sets of cells, wherein the limit of serially arranged sets of cells is the exhaust gas back pressure allowed by the system that generates the exhaust gas or fluid. In other words, the only limit is the loss of load available in the system in order to maintain an acceptable flow of fluid.

Those skilled in the art understand that the cells may as well be arranged parallely, or in series with a different filtering system, which for example provides a previous treatment of the fluid. For example, if the particulate material trapped inside the cells is self-modified by the environment conditions as for example deliquescence, the property of some materials by which they can absorb atmospheric water. Due to a high hygroscopic capacity of the retained powder a metamorphic change in the structure of the powder might for example cement the retaining cloth of the cells.

This is preferably prevented by a previous treatment of the fluid, for example with a filtering system for treating a fluid upstream of an apparatus for filtering micro particles, which is another object of the present invention. Fine contact of water drops is achieved inside a hydrocyclonic device with sprinklers oriented in radial position. The blockade of internal circuits of the sprinkler is avoided by the sprinkler atomizing the water by shooting a fine stream of water at high pressure against a needle in the outside. The impact of the stream against the head of the needle atomizes the water in a cloud of extremely fine particles. The shape of the outer side of the jet is parabolic in order to allow the cloud of particles to vacate from the sprinkler. The throat of the jet, which shoots against the head of the needle is about 1,5 mm in diameter and is protected with a metal mesh filter whose mesh is below 0,5 mm size.

To minimize the pressure loss inside the cyclone the sprinkler is oriented in an angle of about 45°, relative of the centrifugal circulation of the fluid flow with respect of the radial position of the sprinkler and oriented towards the perimetric walls of the cyclone. As the direction of the droplets is against the wall of the cyclone, its action is added to the centrifugal force, which acts over the particles in the fluid flow. Under these effects, the particles settle in the perimetric wall of the cyclone which is covered with a descendent layer of water which retains the powder and inhibits its return to the fluid flow. The efficiency of this combination of effects in one device and in a simultaneous process is for example over 96% of particle retention. After this treatment, which captures almost the 96% of the particles, the residue or difference is, for example, trapped by the dry system without any damage to its cells.

The invention will now be described with reference to the following figures. The scope of the invention is not limited to or by the exemplary embodiment.

BRIEF DESCRIPTION OF FIGURES

Figure 1 shows the fundamental cell 1 which comprises a base stainless steel mesh 3, retaining cloth 2 with permanent particulate material 4 between layers of retaining cloth 2, where the number of cloth layers 2 ranges from one cylindrical layer to "n" - being "n" indeterminate - and a self regenerative particulate material layer 4 subject to regular cleaning.

In Figure 2 a plant view of "n" x "m" basic cells 1 is shown. Any combination of "n" and "m" integer numbers of cells 1 are arranged with a stainless steel flange 6 supporting the cells 1 and closing the access tightly so as to force the gas into a basic cell arrangement, an arrangement of "n" rows of basic cells 1 and an arrangement of "m" columns of basic cells 1.

Figure 3 depicts a specific gas entrance 7, a distribution chamber to basic cells 8, a basic cell gas inlet 9, a cell supporting flange 6, a filter external wall or casing 10, and an outlet for clean gas 11.

Figure 4 shows the safety valve.

DETAILED DESCRIPTION OF THE FIGURES

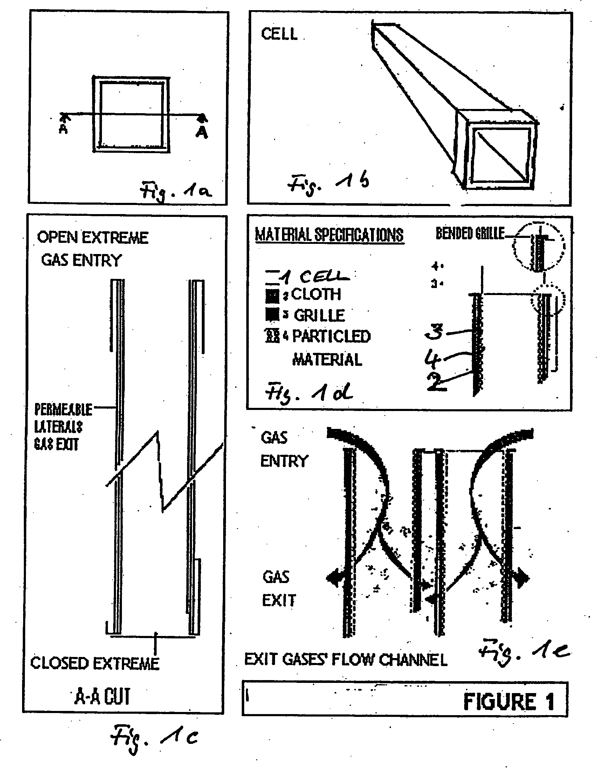

Figure 1 shows the essential aspect of the invention, which is the fundamental basic cell 1. In future, the different technical solutions will be simple combinations and/or variations of cell size, geometry and total number, arranged in series or in parallel.

The option of an arrangement in series for self-contained filtering units will depend on the agreeable exhaust back pressure, or the loss of load available in the system, because two identical units combined in series for example need twice the amount of pressure in order to maintain a steadfast gas flow. On the other hand, the advantage of a serial arrangement is to increase retention capacity in an equivalent factor applied to the particulate material not retained in the first stage. For example, if the first module retains about 90% of particulate material, the option of two identical modules in series will retain about 99% of particulate material. The option in parallel will also increase the retention capacity without increasing loss of load; therefore, it is the adequate option when there is only a limited amount of pressure for fluid to be moved.

A cylindrical geometry was selected for Figure 1 because structural characteristics are better and fabrication less expensive than with other geometry. However, all the alternate geometries, as square, rectangular and/or polygonal sections in general should be protected.

The cells 1 can be fabricated of steel, stainless steel or plastic materials according to conditions of corrosion, temperature and pressure of fluid or filters.

As it can be noted, the basic cell 1 consists of a cylindrical spread-or-fine-mesh-metal column 3 with 1 mm$^2$ to 10 mm$^2$ orifices which will support the retention cloth 2 and supply a cavity for accumulated material 4.

The fluid flow is forced by the support flange 6 to enter the basic cell 1 through the center of a first end and exit through the cylindrical mantle because the other, second end of the basic cell 1 is blocked.

Along the way, the solid particles contained in the fluid start to accumulate in cloth interstices and intercloth spaces, thus forming a retention layer able to trap increasingly small particles as intercloth spaces become more and more saturated. The cloths 2 will be fixed to the column 3, inside and outside, by means of adequate clamps.

Finally, once intercloth layers are established and metal mesh spaces are saturated, the retained solid particles begin to form a layer toward the inside of the cell; this layer should be cleaned regularly; the inside layers will be kept intact because these are the basis of the retention system.

The retaining cloth 2 can be fabricated of steel, stainless steel or plastic materials according to conditions of corrosion, temperature and pressure of fluid or filters.

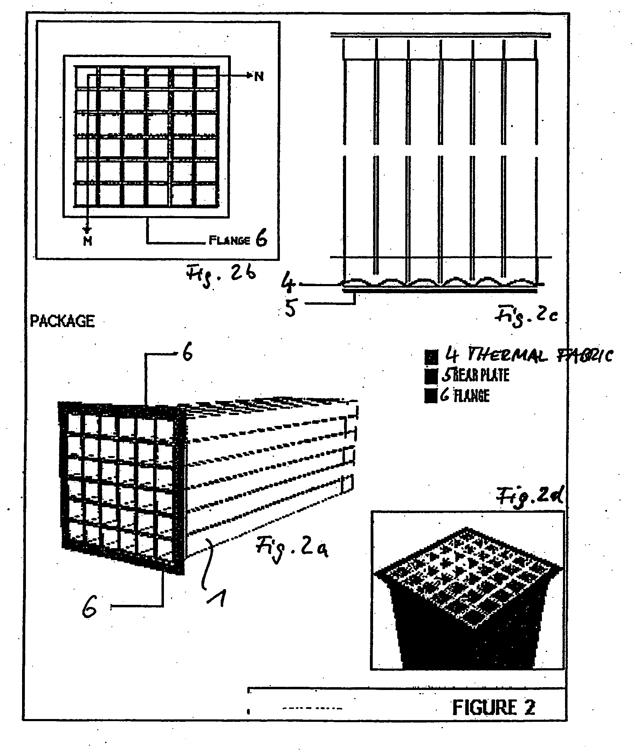

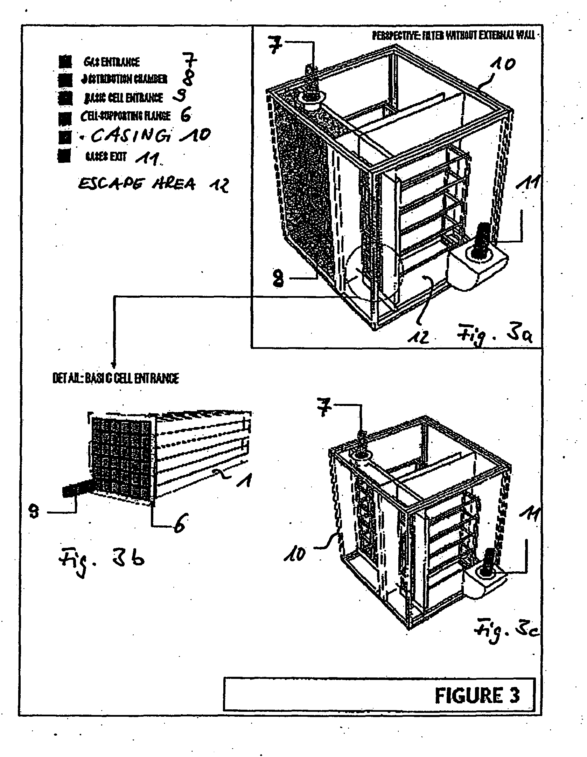

In Figure 2 the support flange 6 performs two essential functions, a) it anchors tightly the basic cells 1, and b) it prevents the fluid to exit along a path different from the inside of the cell 1, which is possible because the support flange 6 is tightly welded to the casing walls 10 as shown by Figure 3.

The support flange 6 is made of stainless steel, for the sake of durability. Flange thickness is determined as per mechanic and structural design for the intended application; flange geometry can be square, rectangular, elliptic, or any other shape more convenient for the application.

Figure 3 shows a specific solution wherein the cells 1 are distributed within the casing 10, allowing the incoming fluid flow to circulate only inside them, because the support flange 6 prevents any other possibility, pass through the shell towards the inside of the casing 10 and exit the system through the upper opening 11.

The casing 10 can be fabricated of steel, stainless steel or plastic materials according to conditions of corrosion, temperature and pressure of fluid or filters.

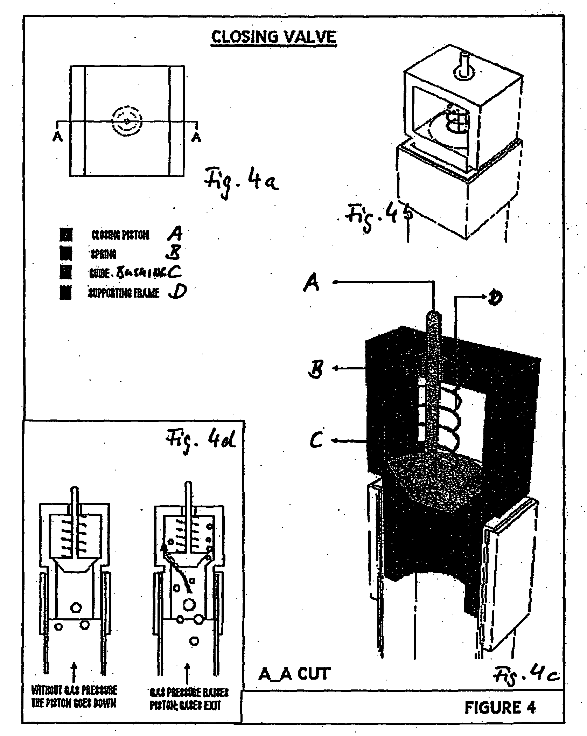

Figure 4 shows a safety valve, which comprises the following elements: a closing piston (A) actuated by a spring at "D", a closing piston guide bushing (B), a support frame (C) welded to the cell at "G", a calibrated spring (D) to close piston "A", some primary retaining cloth (E), a supporting spread and perforated metal mesh (F); where at point (P) the inside pressure, by overcoming spring "D" will open piston "A".

It will now be described in detail, how the invention works, with reference to the figures and examples.

The invention consists of the design and construction of a filter to retain or trap the solid particles contained in high pressure and high temperature exhaust gas. The invention consists of the basic cells, Figure 1, the support and fluid distribution flange, Figure 2, and the casing, Figure 3.

To prevent the occurrence of a dangerous exhaust gas back pressure or counter pressure, the invention includes at least one, preferably two or three safety valves that are installed at the cell closed, second ends, allowing the fluids to escape freely towards the inside of the casing and exit freely to the atmosphere, thus avoiding damage to engine and to the inventive apparatus itself, and supplying a signal when the latter has to be cleaned.

The basic cell performs the function to reduce fluid speed so as to retain solids by means of loss of kinetic energy. Such effect is possible because of the big perpendicular surface versus flow; this is obtained through the multiplicity of basic cells arranged in parallel. All of this can be shown by means of the following equation:

Being:

Q =     Volume of flow
V =     Speed of fluid into the filter, m/sec
A =     Straight section of conduct transporting the fluid

Ai =    Straight section of basic cell
N =     Total number of in-parallel basic cells
V =     Speed of fluid entering each cell
AC =    Individual cell shell area
Vf =    Speed through the shell where particle retention occurs
DC =    Celldiameter
L =     Cell length

Then,

V =     Q/A
Ai =    $\Pi DC^2/4$
V =     Q/N/Ai
Vf =    Q/N/AC = Q/N/($\Pi$DC L)

Example:

An ordinary bus engine emits around 110 l/sec exhaust gas through a 0.0762 m diameter (ø) duct, at a mean speed of about 24,12 m/sec.

At the same speed, the gas flow enters the distribution chamber of our invention (Figure 3); inside the distribution chamber there is an arrangement of 50 basic cells having AC = 0,063 m$^2$; therefore, the particle retention speed will be:

$$0,110 \text{ m}^3 / (50 * 0,063 \text{ m}^2) = 3,49 \text{ cm/sec}$$

The above means that through a geometry of parallel cell arrangement having the shell area shown in the example, a reduction of speed is achieved at the retention point from the original speed of 2412 cm/sec down to 3,49 cm/sec, i.e. more than 690 times. This outstanding speed reduction effect allows the retaining cloths to trap micro particles with no problem at all.

Moreover, the particles slow down along the axial or longitudinal centerline of the cells and reach a speed of about 0 almost at the time the fluid flow changes direction to follow the perpendicular, radial path towards the mantle, which enhances the retention effect.

It is easily understandable that by modifying the number of basic cells and individual cell shell surface the fluid mean speed can be reduced almost to the wanted level, as long as economical restrictions are not taken into account.

The effect caused by this geometric disposition and this multiplicity of cells is that the solid particles deposit themselves softly over the cloths forming a microscopic mesh that, when the filter is saturated, will also allow gas retention by means of the adsorption derived from the huge superficial tension presented by space surfaces.

EXPERIMENT

An experiment showing the effect of the invention will now be described.

Equipment

An apparatus according to the invention as described before was fabricated. The general characteristics of this filter are:

| | |
|---|---|
| Material: | stainless steel |
| Dimension: | 1.300 mm high |
| | 300 mm wide |
| | 300 mm depth |
| Weight: | 45 kg approx. |

The retention system itself is located inside the equipment. The retention area proved to be adequate for meeting in excess the requirements specified by the Chilean norm in force at the time of the experiment.

Along the whole demonstration there was no appreciable counter pressure derived from the loss of load introduced to exhaust gases by filtration equipment. In this way, one of the most demanding design parameters was complied with.

Location of the equipment:

The equipment was installed at the end of a big vehicle (truck) tailpipe.
Installation and cleaning proved to be easy. Installation took no longer than one hour. Subsequent cleaning operation did not take more than 30 minutes including equipment taking off, cleaning and reinstallation.
An important characteristic shown by the equipment was a high level of noise dissipation, more than that of a common silencer, so decrease of acoustic pollution adds to decrease of particulate pollution.

Filter

The filter was installed in a 320-HP-turbomotor, Model 19231, year 1984, MAN truck.
According to the norm, particle emission for this type of motor is 4,2 $m^{-1}$; this level corresponds to a previous calibration of the opacimeter carried out with gas flows containing different particulate material concentrations. As a reference, a motor of the latest technology in the market should not exceed 1,6 $m^{-1}$.

Opacimenter

A MAHA, type MDO2 opacimeter was used, same brand and type used by all checkup plants and Ministerio de Transportes and Carabineros de Chile mobile units.
The opacimeter operates basically with a photoelectric cell, which receives a higher or lower amount of light depending on the particle load contained in the gas sample coming in through the suction probe. This operation is carried out in a dark chamber in order to suppress the effect of exterior light and mainly the effect of white particles that, by reflecting exterior light, increase the amount of light on the photocell and produce contradictory results.
The equipment is previously calibrated according to the characteristics of the motors to be inspected in order to determine a scale which will act as the pattern. As already noted, presently there are three levels of requirement depending on motor technology and fabrication year:

$4,2\ m^{-1}$     for turbo motors without gas retention system,
$2,2\ m^{-1}$     for turbo motors with gas retention system,
$1,6\ m^{-1}$     latest generation ecological motors.

To make the measurements, the motor is accelerated from idle to +/- 4.000/4.500 rpm in 7 seconds; during this time up to 5 measurements can be taken automatically by the equipment. If two consecutive measurements differ by less than 0.5, the equipment considers that measurement as correct. If this is not the situation, measurements are automatically discarded.
Valid measurements will be those two showing a difference equal to, or less than 0.5.
The equipment will issue the verdict "approved" every time that coherent measurements (difference less than 0.5) are within the limit established according to type of motor, and adequately set in the opacimeter microprocessor.
When coherent data are not obtained, or those having been obtained are higher than the accepted limit, the opacimeter will issue the verdict "not approved" together with the list of measurements.

RESULTS

1st Measurement

An absolutely new filter was installed at a truck speedometer reading of 736768 km.
As already noted, the filter reaches its maximum retention capacity after reaching some level of saturation because it operates according to the inventive general principle, i.e. the material already accumulated acts as the main retaining element. However, as it is important to know the filter original retention capacity, a measurement was made immediately after installing the filter.
Gas emission was also measured without filter in order to determine the motor pollution level at the time.

Results were as follows:

|  | Without filter | With filter |
| --- | --- | --- |
| 1st | 2,87 | 0,90 |
| 2nd | 2,79 | 1,05 |
| Mean | 2,83 | 0,975 |
| Ratio: | 2,9 times | |

As it can be noted, the measurement shows a pollution index 2,9 times less than the motor pollution index without filtering element. The index reached with the filter just installed is much lower than that required by the norm for latest generation ecological vehicles, 1.6 m$^{-1}$.

2nd Measurement

At the second measurement, again, pollution index was measured with and without filter. As truck speedometer reading was 738250 km, the truck had run another 1482 km in comparison with 1st measurement. Results were as follows:

|  | Without filter | With filter |
| --- | --- | --- |
| 1st | 1,95 | 1,22 |
| 2nd | 1,72 | 1,08 |
| Mean | 1,835 | 1,15 |
| Ratio: | 1,596 times | |

In this case an anomaly was observed, because, although a decrease of the pollution index measured without filter was to be expected due to an injection system repair, the pollution index measured with filter should have decreased with respect to the first measurement because the higher the saturation level, the better the particle retention capacity should be.

To clarify the situation shown above, the equipment was disassembled to check the relief system, which was in perfect condition. However, an anomaly between measurement procedure and filter operative system was detected.

Actually, during the static measurement system the engine is accelerated in neutral from idle to maximum rpm over a period of time of 7 seconds. During this period of time the equipment takes 2 to 5 measurements, depending on the coherence between subsequent measurements. If the difference between two such measurements is less than 0.5, both are approved. On the contrary, a measurement is repeated five times (in fact, this operation can be repeated any number of times). When an engine is accelerated abruptly, a pressure stroke occurs and is transmitted up to the filtering system. As wall speed in confined fluids is nil, the stroke produces the accumulation of certain amount of particulate material at the post-filtration zone.

The accumulated particulate material gets loose by the stroke pressure wave, is released, and joins the exhaust flow. In this way, the opacimeter measures the particles originated during the present combustion plus the particles originated in past combustions and already accumulated at the post-filtering zone. The acceleration procedure was, then, corrected to prevent the pressure stroke from occurring and action has been taken so as to prevent the post-filtering material from causing disturbances to the measurements taken by the opacimeter.

3rd Measurement

With the truck speedometer showing 739880 km, i.e. after additional 1630 km and a total saturation of the filter after 3112 km, the 3rd measurement was made. This time, only with-filter measurement was made because it was thought that the index without filter was not worse than before.

The results were as follows:

| | Without filter | With filter |
|---|---|---|
| 1 st | 1,95 (2nd meas.) | 0,75 |
| 2nd | 1,72 (2nd meas.) | 0,43 |
| Mean | 1,835 | 0,585 |
| Ratio: | 3,137 times | |

This time there was a complete coherence between expectations offered by the developed technology and equipment behavior. The saturation effect is clearly seen as it caused a decrease of the pollution index down to the average value of 0,585. This is a very good result considering that the index requested by norm to the latest technology engines is 1,6 m$^{-1}$.

Filter cleaning:

After the 3rd measurement, the equipment was disassembled for inspection and cleaning. Inspection showed the internals to be in perfect condition, without any damage or alteration compared to equipment original condition. This is a proof that the equipment design is perfectly adequate for the extreme conditions of temperature, pressure and vibration in engine exhaust tailpipes.

It is to be noted that although a cleaning was carried out, the equipment would have been able to continue in operation for additional 3000 km without any need to be cleaned.

What was stated above can be quantified as follows:

The weight of the particulate material retained by the filter at 3122 km was:

1284,93 g           that is           0.41157 g/km.

According to the calculation developed in the following section, the requested filter prevented the following number of micro particles from joining the breathable atmosphere:

3.589.189.900.000.000.000

Physical Magnitude of Pollution:

Certainly, ordinary citizens do not know the actual magnitude represented by the values published as a measure of pollution. People only react physically, e.g. eye, skin and/or respiratory ailments/illness, etc.

To understand and evaluate how this new technology, which is the object of this application for a patent, minimises the serious damage that particulate emissions cause to public health, the parameters of the emissions are described below.

Pollution identification:

Soot or black smoke discharged by imperfect combustion engines is actually native carbon forming a sort of molecular clot with characteristics similar to graphite. Some types of soot contain very small micro crystals (so small that contain only a few graphite-structured cells). The physical properties of these materials are determined mainly by the nature and size of material surface. Finely divided forms with relatively big surfaces and attraction forces only partially saturated easily absorb huge amounts of gas and solute from solutions. This property, which in the case of gas retention in a solid because of the effect of surface forces superposed to molecular unsaturated forces, is called adsorption, and it is a subsidiary effect of the particle retention filter because it works as a gas mask and traps considerable amounts of combustion gas once the optimum filter saturation level has been reached.

Size of soot particle:

Size of soot particles goes from 150 x 10$^{-10}$ m to 900 x 10$^{-10}$ m (10$^{-10}$ m =10$^{-7}$ mm = 1 Ångström [Å]). An average particle size of 525 Å will be chosen; however, as soot particles are produced at high pressure and temperature, it is probable that the sizes of micro crystals will tend to be smaller than the average, not bigger.

A cubic particle formed of parallel layers, 3.35 Å apart from each other, will be considered. The distance between carbon atoms has been established as being 1,415 Å. The joining angle between lines of the same layer will be 45°.

Number of carbon atoms per particle (NCp)

According to the geometry defined above, corresponding to graphite crystal structure, each layer has 525 rows of atoms, 218 atoms per row. Then the cubic micro particle will have 157 layers and the number of carbon atoms in each particle will be

$$NCp = 525*218*157 = 17968650$$

Volume of particle (Vp)

In order to approach microscopic world, the volume of the particle already identified and sized will be established as follows

$$Vp = 525^3 \text{ Å}^3 = 144.703.125 \text{ Å}^3$$

$$\text{Expressed in } cm^3 = 0.00000000000000014470312$$

Weight of particle (Wp)

The weight of the particle sized is obtained from carbon gram-atom weight divided by the Avogadro number and multiplied by NCp, as follows

$$Wp \quad = \quad 12*NCp / 6.023*10^{23}$$

$$= \quad 12*17.968.650 / 6.023*10^{23} = 3.58*10^{-16} \text{ g}$$

$$= \quad 0.000000000000000358 \text{ g}$$

Chilean norm considers index 150 as acceptable which means 150 $\mu g/m^3$ of particulate material in breathable air.

For ordinary citizens to understand what is accepted by the Chilean norm, this will be expressed in number of particles considered acceptable per breathable air cubic meter, as follows

$$N_m^3 \quad = \quad 150*10^{-6} [g/m^3] / 3.58*10^{-16} [g] = 4.19*10^{11} \text{ m}^{-3}$$

$$= \quad 419.000.000.000 \text{ m}^{-3}$$

$$\text{i.e.} \quad 419 \text{ thousand million particles per cubic meter of air}$$

To understand how far from reality Chilean norms are, it is useful to consider the well known norm PM10 which establishes the need to eliminate particles bigger than 10 microns ($10^{-2}$ mm); considering that most of the particulate material emitted by mobile sources has an average lineal size of 525 Å, 0.0525 microns, then the norm PM10 deals with particles 190 times bigger than the particles that inundate the surrounding space. The retention filter is designed precisely to trap the particles that are really emitted by those mobile sources.

**Reference signs**

1 cell
2 retaining cloth
3 supporting structure
4 particled material
5 rear plate
6 flange
7 gas entrance
8 distribution chamber
9 cell entrance
10 casing
11 gas exit
12 escape area
A closing piston
B spring
C guide bushing
D frame

**Claims**

1. An apparatus for filtering micro particles, comprising tubular cells, wherein a first end of each cell is open to let a fluid enter from a distribution area into the cell and a second end of each cell is closed, the fluid being forced to change direction of flow from axial to radial for vacating the cell through a cell mantle into an escape area, and wherein the tubular cells form a package supported by a flange, the flange enveloping the package and separating the distribution area from the escape area,
**characterized in that**
the speed of the fluid is reduced down to such a level that micro particles can settle over a retaining cloth and gradually fill up interstices of the retaining cloth and spaces between layers of the retaining cloth, the capacity of the retaining cloth to trap particles increasing as the saturation process progresses, the speed of the saturation progress depending upon the number of cells and the number of layers of retaining cloth, that is wrapped around the cell mantle.

2. Apparatus according to claim 1, **characterized in that** each cell comprises a supporting structure of round, square, rectangular or polygonal cross-section and preferably consist in a perforated metal tube, spread metal or with a structurally self-supporting mesh of metal.

3. Apparatus according to claim 1 or 2, **characterized in that** a thermal fabric layer made of mineral wool covers the inside of the second end of the cells in such a way that the thermal fabric layer penetrates the inside space of the cells in a distance of about 0,01 m or more, one thermal fabric layer preferably covering the inside of second ends of a multitude of cells, the second ends being closed by a steel plate, which is pressed against the thermal fabric layer and **in that** position is welded to the second ends of the cells.

4. Apparatus according to one of the preceding claims, **characterized in that** the package of tubes is contained in a casing, the casing being separated into the distribution area and the escape area by the supporting flange.

5. Apparatus according to one of the preceding claims, **characterized in that** a part of the first end of each cell projects through an opening in the supporting flange, the part of the first end preferably being bent in angle of about 90° outwardly from the cell axis, the bent parts preferably being welded to the supporting flange and/or a neighbouring bent part of a first end.

6. Apparatus according to one of the preceding claims, **characterized in that** the first ends of the cells form a rectangular and a metal tape, that surrounds the rectangular, is welded to the outwardly facing walls of the cells.

7. Apparatus according to one of the preceding claims, **characterized in that** one or more tubular cells comprise a relief valve, which is installed at the second end of the cells, the relief valve being designed to operate before an exhaust gas back pressure can damage a system that generates the exhaust gas or fluid, or the cells.

8. Apparatus according to one of the preceding claims, **characterized in that** the supporting structure is made of spread metal or fine metal mesh in such a way that it allows particulate material to settle over, and accumulate in, mesh spaces, establishing a limit between the already settled particulate material that is permanently accumulated on and between the layers of the retaining cloth, and the material that builds up from the metal mesh towards the cell centerline, which is removed periodically.

9. Apparatus according to one of the preceding claims, **characterized in that** the retaining cloth is arranged as to form a stereo mesh, the retaining cloth comprising visible spaces and being wrapped around itself, thereby forming a labyrinth in the radial flow direction of the fluid.

10. Apparatus according to one of the preceding claims, **characterized in that** the number of layers of retention cloth wrapped around the supporting structure is varied from one layer up to the number of layers producing an exhaust gas back pressure allowed by the system that generates the exhaust gas or fluid.

11. Apparatus according to one of the preceding claims, **characterized in that** the cells produce gradually an interlayer filling formed by the particulate material, being able to trap particles sized 500 Å and smaller, preferably smaller than the particles that form the reticule.

12. Apparatus according to one of the preceding claims, **characterized in that** the speed of the fluid is reduced down to such a level that the low kinetic energy of the retained particles prevents them from getting packed and/or forming hardened layers.

13. Apparatus according to one of the preceding claims, **characterized in that** the flange supporting the cells acts as a base and a diverter inside the casing, the casing together with the flange allowing the fluid to follow only one way, with no possible alternative, towards the interior of the cells, and further out of the casing after the fluid having deposited its particulate material inside the cells; wherein the cells and/or sets of cells are preferably removable from the casing, in order to be cleaned and reinstalled later into the casing.

14. Apparatus according to one of the preceding claims, **characterized in that** a primary set of cells is serially arranged with a secondary set of cells, the secondary set of cells containing the same or different number of cells than the primary set, and that preferably the primary and secondary sets of cells are serially arranged further sets of cells, wherein the limit of serially arranged sets of cells is the exhaust gas back pressure allowed by the system that generates the exhaust gas or fluid.

15. Apparatus according to one of the preceding claims, **characterized in that** the primary set of cells is serially arranged downstream of a different filtering system, which provides a previous treatment of the fluid.

16. Filtering system for treating a fluid upstream of an apparatus for filtering micro particles, preferably according to one of claims 1 to 15, **characterized in that** the filtering system is a hydrocyclonic device with perimetric walls and sprinklers, the sprinklers shooting a fine stream of water against a needle and the sprinklers being oriented in an angle of about 45° relative to a flow of the fluid through the hydrocyclonic device.

Fig. 1a

CELL

Fig. 1b

OPEN EXTREME
GAS ENTRY

PERMEABLE
LATERALS
GAS EXIT

CLOSED EXTREME

A-A CUT

Fig. 1c

MATERIAL SPECIFICATIONS

BENDED GRILLE

1 CELL
2 CLOTH
3 GRILLE
4 PARTICLED
MATERIAL

3
4
2

Fig. 1d

GAS
ENTRY

GAS
EXIT

EXIT GASES' FLOW CHANNEL

Fig. 1e

FIGURE 1

Fig. 2b

PACKAGE

Fig. 2c

4
5

■ 4 THERMAL FABRIC
■ 5 REAR PLATE
■ 6 FLANGE

6

Fig. 2a

Fig. 2d

6

6

1

FIGURE 2

GAS ENTRANCE 7
DISTRIBUTION CHAMBER 8
BASIC CELL ENTRANCE 9
CELL-SUPPORTING FLANGE 6
CASING 10
GASES EXIT 11
ESCAPE AREA 12

PERSPECTIVE: FILTER WITHOUT EXTERNAL WALL

Fig. 3a

DETAIL: BASIC CELL ENTRANCE

Fig. 3b

Fig. 3c

FIGURE 3

## CLOSING VALVE

Fig. 4a

Fig. 4b

CLOSING PISTON  A
SPRING  B
GUIDE. BUSHING C
SUPPORTING FRAME  D

Fig. 4d

WITHOUT GAS PRESSURE THE PISTON GOES DOWN

GAS PRESSURE RAISES PISTON GASES EXIT

A_A CUT

Fig. 4c

FIGURE 4